(19) Europäisches Patentamt
European Patent Office
Office européen des brevets

(11) Veröffentlichungsnummer: **0 276 451 B1**

(12) **EUROPÄISCHE PATENTSCHRIFT**

(45) Veröffentlichungstag der Patentschrift: **29.05.91**

(51) Int. Cl.⁵: **G11B 5/55**, G11B 5/584

(21) Anmeldenummer: **87118762.1**

(22) Anmeldetag: **17.12.87**

(54) **Anordnung zum genauen Positionieren eines Magnetkopfs.**

(30) Priorität: **22.12.86 DE 3644005**

(43) Veröffentlichungstag der Anmeldung:
**03.08.88 Patentblatt 88/31**

(45) Bekanntmachung des Hinweises auf die
Patenterteilung:
**29.05.91 Patentblatt 91/22**

(84) Benannte Vertragsstaaten:
**DE GB**

(56) Entgegenhaltungen:
EP-A- 0 190 555
US-A- 3 292 168
US-A- 3 541 270

PATENT ABSTRACTS OF JAPAN, Band 9, Nr.
48 (P-338)[1771], 28. Februar 1985; & JP-A-59
185 020 (SONY K.K.) 20-10-1984

IBM TECHNICAL DISCLOSURE BULLETIN,
Band 17, Nr. 1, Juni 1974, Seiten 217,218,
Armonk, New York, US; T.A. SCHWARZ:
"Compensation for element-to-element misregistration in a dual element head"

PATENT ABSTRACTS OF JAPAN, Band 9, Nr.
83 (P-348)[1806], 12. April 1985; & JP-A-59 213

070 (SANKIYOU SEIKI SEISAKUSHO K.K.)
01-12-1984

(73) Patentinhaber: **TANDBERG DATA A/S**
**Kjelsasveien 161 Postboks 9 Korsvoll**
**N-0808 Oslo 8(NO)**

(72) Erfinder: **Guttorm, Rudi**
**Edvard Griegsveien 17**
**N-01472 Fjellhamar(NO)**

(74) Vertreter: **Goddar, Heinz J., Dr. et al**
**FORRESTER & BOEHMERT Widenmayerstras-**
**se 4/I**
**W-8000 München 22(DE)**

## Beschreibung

Die Erfindung bezieht sich auf das genaue Positionieren eines Magnetkopfs auf verschiedene Spuren eines Magnetbands in einem Magnetbandgerät gemäß dem Oberbegriff des Patentanspruchs 1.

Aus der DE-OS 32 44 149 ist eine Anordnung zum Positionieren eines Magnetkopfs auf verschiedenen Spuren eines Magnetbands bekannt, bei dem das Magnetband in einer Kassette untergebracht ist, die in Längsrichtung in das Magnetbandgerät eingeschoben wird. Das Magnetband wird unter Verwendung einer Bandantriebsrolle in Längsrichtung bewegt und die Aufzeichnung erfolgt unter Verwendung eines Magnetkopfs auf mehreren parallelen Spuren. Der Magnetkopf ist beispielsweise mit zwei übereinander angeordneten Schreib/Leseköpfen versehen und die Aufzeichnung erfolgt in vier parallelen Spuren. Unter Verwendung einer Positioniereinrichtung wird der Magnetkopf auf die verschiedenen Spuren positioniert. Die Positioniereinrichtung enthält einen als Schrittmotor ausgebildeten Elektromotor, an dem ein Schnekkengetriebe angeordnet ist, das mit einem Schraubengetriebe zusammenarbeitet, über das ein den Magnetkopf aufnehmender Magnetkopfträger senkrecht zur Bewegungsrichtung des Magnetbands verschoben wird.

Obwohl für die Positioniereinrichtung präzise Bauteile verwendet werden, ist eine Abweichung eines Schreib/Lesekopfs von der genauen Mitte einer Spur möglich, wenn der Magnetkopf an den äußeren Spuren positioniert wird. Bei Magnetbandgeräten mit einer geringen Anzahl von Spuren macht diese Abweichung keine Schwierigkeiten bei der Aufzeichnung oder Wiedergabe von Datensignalen. Falls jedoch die Anzahl der Spuren auf demselben Magnetband erhöht wird, können derartige Abweichungen nicht hingenommen werden.

In der europäischen Patentanmeldung 86100172.5 veröffentlicht als EP-A-0190555, ist ein Verfahren beschrieben, bei dessen Verwendung die mechanischen Toleranzen der Positioniereinrichtung dadurch ausgeglichen werden, daß während eines Meßvorgangs durch ein Positionieren auf mindestens eine Spur die genauen Positionen eines Schreibkopfs oder Lesekopfs auf den Mitten der Spuren auf dem Magnetband ermittelt werden und daß den ermittelten Positionen Positionswerte für den Elektromotor zugeordnet werden, die dann bei dem normalen Betrieb des Magnetbandgeräts berücksichtigt werden. Bei diesen bekannten Verfahren werden jedoch nur Positionswerte ermittelt, die durch Toleranzen in der Positioniereinrichtung auftreten.

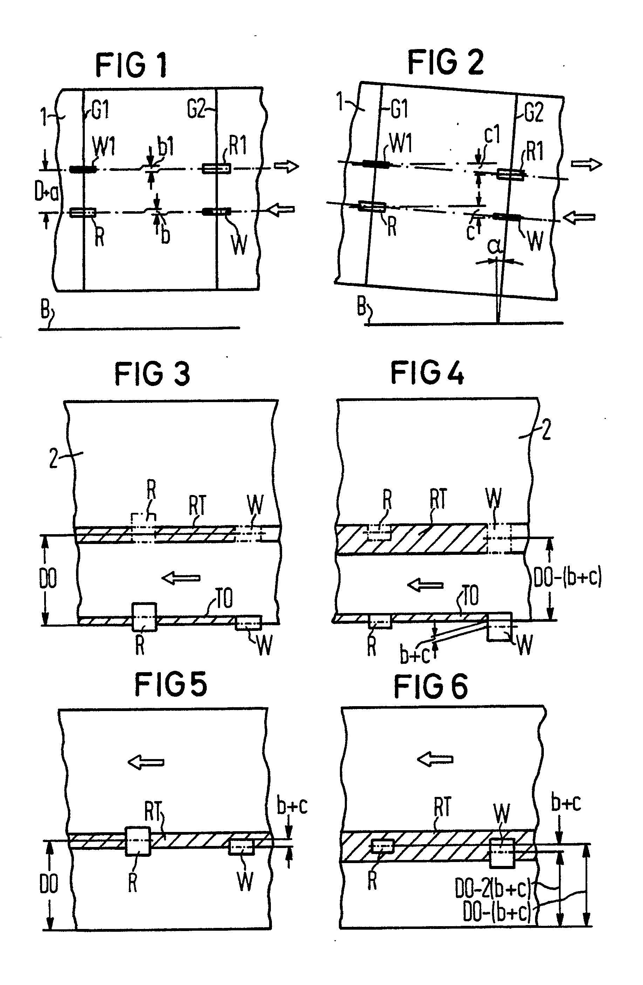

Bei Magnetköpfen und deren Justierung können jedoch weitere Abweichungen auftreten, die durch das bekannte Verfahren nicht erfaßt werden. Der in FIG 1 dargestellte Magnetkopf ist im Idealfall derart in einem Magnetbandgerät justiert, daß Spaltlinien G1 und G2, die senkrecht zur Bewegungsrichtung eines nicht dargestellten Magnetbands verlaufen, auch genau senkrecht zu einer Bezugsebene B sind, die beispielsweise die Grundplatte einer das Magnetband aufnehmenden Kassette sein kann. Der Magnetkopf 1 enthält zwei Schreibköpfe W und W1 und zwei diesen zugeordnete Leseköpfe R bzw. R1, die in einem Sollabstand D voneinander angeordnet sein sollten. Jedoch wird dieser Abstand D bei der Fertigung der Magnetköpfe nicht immer genau eingehalten, so daß der tatsächliche Abstand D + a beträgt, wobei a positiv oder negativ sein kann. Bei einer Aufzeichnung mit dem Schreibkopf W wird das Band, wie durch einen Pfeil dargestellt ist, von rechts nach links bewegt, während bei einer Aufzeichnung durch den Schreibkopf W1 das Magnetband von links nach rechts bewegt wird. Senkrecht zur Bewegungsrichtung des Magnetbands kann der Schreibkopf W bzw. W1 gegenüber dem Lesekopf R bzw. R1 infolge von Fertigungstoleranzen versetzt angeordnet sein und zwar um einen Wert b bzw. b1, die beide ebenfalls positiv oder negativ sein können. Dies hat zur Folge, daß bei einer Aufzeichnung durch die Schreibköpfe W oder W1 die Spuren nicht immer genau in der Mitte der Leseköpfe R bzw. R1 liegen.

Bei der Darstellung in FIG 2 ist zusätzlich angenommen, daß der Magnetkopf 1 um einen Winkel $\alpha$ gegenüber der Bezugsfläche B verdreht angeordnet sein kann. Dieser Winkel ist in FIG 2 aus Gründen der Anschaulichkeit übertrieben groß dargestellt. Diese Verdrehung äußert sich ebenfalls in einem Versatz c bzw. c1 der Schreibköpfe W bzw. W1 gegenüber den Leseköpfen R bzw. R1.

Ein weiterer Versatz der Spuren kann dadurch auftreten, daß das Magnetband sich innerhalb der Führungspfosten des Magnetbandgeräts oder der Kassette in Abhängigkeit von der Bewegungsrichtung des Magnetbands senkrecht zu dieser verschiebt.

Diese unterschiedlichen Lagen der Spuren beim Schreiben und beim Lesen werden durch das bekannte Verfahren nicht berücksichtigt.

Der Erfindung liegt daher die Aufgabe zugrunde, eine genaue Positionierung des Magnetkopfs auf verschiedene Spuren des Magnetbands auch dann zu ermöglichen, wenn der Magnetkopf kleine Ungenauigkeiten in der Anordnung mindestens eines Schreibkopfs und eines zugehörigen Lesekopfs aufweist und gegebenenfalls auch nicht genau justiert ist.

Erfindungsgemäß wird die Aufgabe bei dem Verfahren der eingangs genannten Art durch die im Patentanspruch 1 angegebenen Merkmale gelöst.

Weiterbildungen der Erfindung ergeben sich aus den Unteransprüchen.

Der Stand der Technik und Ausführungsformen der Erfindung werden im folgenden anhand von Zeichnungen näher erläutert. Es zeigen

FIG 1 eine schematische Darstellung eines Magnetkopfs,

FIG 2 eine schematische Darstellung eines einen Neigungswinkel zu einer Bezugsfläche aufweisenden Magnetkopfs,

FIG 3 eine Darstellung einer Aufzeichnung einer Bezugsspur auf ein Magnetband unter Verwendung eines schmalen Schreibkopfs und eines breiten Lesekopfs,

FIG 4 eine Darstellung einer Aufzeichnung einer Bezugsspur auf ein Magnetband unter Verwendung eines breiten Schreibkopfs und eines schmalen Lesekopfs,

FIG 5 eine Darstellung einer Ermittlung einer durch einen schmalen Schreibkopf aufgezeichneten Spur durch einen breiten Lesekopf,

FIG 6 eine Darstellung einer Ermittlung der Mitte einer durch einen breiten Schreibkopf aufgezeichneten Spur mittels eines schmalen Lesekopfs,

FIG 7 eine korrigierte Aufzeichnung von Spuren auf ein Magnetband,

FIG 8 ein Blockschaltbild einer Anordnung zur Durchführung des Verfahrens.

Bei den in den FIG 3 und 4 gezeigten Darstellungen wird eine Bezugsspur RT auf ein Magnetband 2 unter Verwendung des Rands des Magnetbands 2 als Bezugsgerade aufgezeichnet. Zunächst wird, wie es beispielsweise in der US-PS 4,476,503 beschrieben ist, der Rand des Magnetbands 2 ermittelt, wobei der Magnetkopf 1 soweit senkrecht zur Bewegungsrichtung des Magnetbands 2 bewegt wird, bis der Schreibkopf W nicht mehr das Magnetband berührt. Er wird dann in umgekehrter Richtung bewegt, während er gleichzeitig Schreibsignale empfängt. Solange der Schreibkopf W nicht mit dem Magnetband 2 in Berührung kommt, werden auf diesem keine Signale aufgezeichnet. Der Lesekopf R, der bei dem Ausführungsbeispiel nach FIG 3 als breiter Lesekopf ausgebildet ist, erzeugt auch dann keine Lesesignale. Sobald jedoch der Schreibkopf W über das Magnetband 2 zu liegen kommt und eine Spur TO in zunehmender Breite aufgezeichnet wird, erkennt der Lesekopf R diese Spur TO und in Abhängigkeit von einem Schwellenwert wird bei einer entsprechenden Breite der Spur TO die Kante des Magnetbands 2 erkannt. Anschließend wird der Schreibkopf W durch eine entsprechende Anzahl von Steuersignalen an den als Schrittmotor ausgebildeten Elektromotor der Positioniereinrichtung um eine Strecke DO in eine Position bewegt, die in FIG 3 gestrichelt dargestellt ist und der Schreibkopf W zeichnet die Bezugsspur RT auf das Magnetband 2 auf.

Wenn, wie in FIG 4 dargestellt, der Schreibkopf W breit und der Lesekopf R schmal ausgebildet sind, um Daten überschreiben zu können, erkennt der Lesekopf R bei derselben Breite der Spur TO bereits die Kante des Magnetbands 2, wenn sich bei einem Versatz zwischen den beiden Köpfen um b + c die Mitte des Schreibkopfs W noch nicht an dem Rand des Magnetbands 2 befindet. Wenn dann der Magnetkopf 1 um denselben Abstand DO bewegt wird und die Bezugsspur RT aufgezeichnet wird, ist diese um den Wert b + c, der im folgenden als erster Korrekturwert bezeichnet wird, versetzt auf dem Magnetband 2 aufgezeichnet. Entsprechendes gilt, wenn der Schreibkopf W in der anderen Richtung gegenüber dem Lesekopf R versetzt ist. In diesem Fall befindet sich der Schreibkopf W schon weit auf dem Magnetband 2, bis der Lesekopf R die Spur TO erkennt.

Im Falle eines breiten Schreibkopfs W und schmalen Lesekopfs R muß somit für die genaue Aufzeichnung der Bezugsspur RT der erste Korrekturwert b + c berücksichtigt werden.

In den FIG 5 und 6 ist der Fall dargestellt, daß für das Lesen der Bezugsspur RT oder für das Aufzeichnen von weiteren Spuren in vorgegebenen Abständen von der Bezugsspur RT die Mitte der Bezugsspur RT genau gefunden werden muß. Dies erfolgt dadurch, daß unter Verwendung des Lesekopfs R die beiden Ränder der Bezugsspur RT ermittelt werden und daß dann der Mittelwert der Positionswerte an den Rändern der Bezugsspur RT gebildet wird, um den Positionswert der Mitte der Bezugsspur RT zu ermitteln. Dieser Positionswert weicht um den Korrekturwert b + c von dem Positionswert des Schreibkopfs W beim Aufzeichnen der Bezugsspur RT ab, so daß aus der Differenz der beiden Positionswerte der Korrekturwert b + c auf einfache Weise ermittelt werden kann. Für die Ermittlung des Korrekturwerts b + c ist es nicht erforderlich, die Bezugsspur RT zu verwenden, sondern dies kann nach jedem Aufzeichnen einer beliebigen Spur durch den Schreibkopf W erfolgen, wenn der Positionswert des Schreibkopfs W beim Aufzeichnen gespeichert wird und anschließend mittels des Lesekopfs R die Mitte der aufgezeichneten Spur ermittelt wird und der der Mitte zugeordnete Positionswert mit dem Positionswert des Schreibkopfs W beim Aufzeichnen der Spur verglichen wird. Bei der Darstellung in FIG 5 wurde wieder von einem schmalen Schreibkopf W und einem breiten Lesekopf R ausgegangen.

Wenn ein breiter Schreibkopf W und ein schmaler Lesekopf R verwendet werden und auf dieselbe Weise wie bei der FIG 5 die Mitte der Bezugsspur RT ermittelt wird, weist der Schreibkopf W vom Rand des Magnetbands 2 den Abstand DO - 2 (b + c) auf, während der Lesekopf R vom Rand den Abstand D - (b + c) aufweist. Aus der Differenz der Positionswerte des Lesekopfs R und des Schreibkopfs W kann wiederum der Korrekturwert b + c ermittelt werden.

Auch hier ist es nicht erforderlich, für die Ermittlung des Korrekturwerts b + c die Bezugsspur RT zu verwenden, sondern es kann jede andere Spur benutzt werden, wenn der Positionswert beim Schreiben durch den Schreibkopf W und der des Lesekopfs R nach dem Ermitteln der Mitte der Spur miteinander verglichen werden

Es ist auch möglich, sowohl bei einem schmalen Schreibkopf W und einem breiten Lesekopf R als auch bei einem breiten Schreibkopf W und einem schmalen Lesekopf R die Veränderung der Lage des Magnetbands 2 in Abhängigkeit von der Bewegungsrichtung zu ermitteln. Zu diesem Zweck wird wiederum nach dem Aufzeichnen einer Spur durch den Schreibkopf W und Speichern dessen Positionswert die Mitte der Spur durch den Lesekopf R ermittelt. Anschließend wird die Bewegungsrichtung des Magnetbands 2 umgedreht und es wird erneut durch den Lesekopf R die Mitte der Spur ermittelt und aus der Differenz der den Mitten der Spur zugeordneten Positionswerte wird die bewegungsrichtungsabhängige seitliche Verschiebung als zweiter Korrekturwert ermittelt.

Für die Durchführung des in den FIG 3 bis 6 dargestellten Verfahrens ist nur jeweils ein Kopfsystem bestehend aus einem Schreibkopf W und einem Lesekopf R in einem Magnetkopf erforderlich. Falls jedoch mehrere Kopfsysteme in dem Magnetkopf 1 vorgesehen sind, können die den anderen Kopfsystemen zugeodneten ersten Korrekturwerte b1 + c1 in entsprechender Weise ermittelt werden.

Mit Hilfe des Verfahrens ist es auch möglich, den Abstand D + a zu ermitteln, der den Abstand der beiden Kopfsysteme angibt.

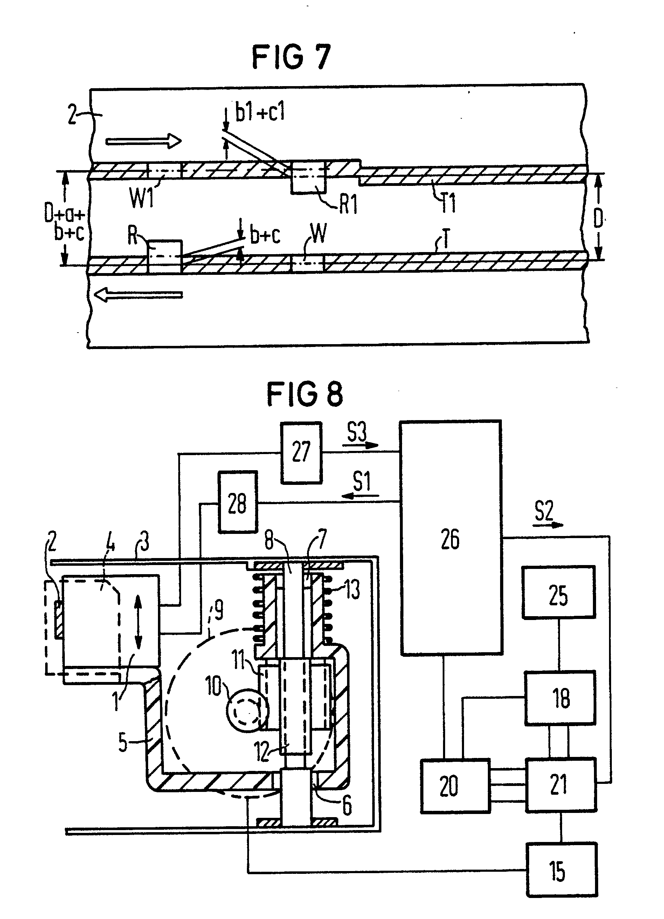

Bei der Darstellung in FIG 7 sind entsprechend den FIG 1 und 2 zwei Kopfsysteme vorhanden, die aus dem Schreibkopf W und dem Lesekopf R bzw. dem Schreibkopf W1 und dem Lesekopf R1 gebildet werden. Um nun eine genaue Aufzeichnung von Spuren T und T1 auf dem Magnetband 2 sowie eine genaue Wiedergabe zu ermöglichen, werden zunächst entsprechend dem in den FIG 5 und 6 dargestellten Verfahren die Korrekturwerte b + c bzw. b1 + c1 ermittelt. Anschließend kann die Bewegungsrichtung des Magnetbands 2 umgedreht werden und es kann der zweite Korrekturwert ermittelt werden, der die seitliche Verschiebung des Magnetbands 2 in Abhängigkeit von der Bewegungsrichtung angibt. Dies kann unter Verwendung eines Lesekopfs R oder beider Leseköpfe R und R1 erfolgen, wobei dann die ermittelten zweiten Korrekturwerte gegebenenfalls gemittelt werden können. Anschließend wird zur Ermittlung von a der Lesekopf R, nach dem sein genauer Positionswert auf der Mitte der Spur T gespeichert wurde, auf die Mitte der Spur T1' bewegt und aus der Differenz der beiden Positionswerte ergibt sich der Wert D + a + (b + c). Da der Sollabstand D der beiden Kopfsysteme bekannt ist und auch der Korrekturwert b + c bekannt ist, kann auf einfache Weise a ermittelt werden und beim Aufzeichnen der Spur T1 können alle drei Korrekturwerte berücksichtigt werden, so daß diese genau in einem Abstand D von der Spur T aufgezeichnet wird. In entsprechender Weise können beim Lesen der Daten die Korrekturwerte berücksichtigt werden.

Die in FIG 8 dargestellte Anordnung zur Durchführung des Verfahrens zeigt einen Ausschnitt aus einem Magnetbandgerät, das als Kassettenmagnetbandgerät ausgebildet ist. Ein derartiges Kassettenmagnetbandgerät ist beispielsweise der DE-OS 32 44 165 oder der DE-OS 32 44 149 zu entnehmen. In einem Gehäuse 1 des Kassettenmagnetbandgeräts ist eine nicht dargestellte Antriebsanordnung für ein Magnetband 2 und eine Positioniereinrichtung für den Magnetkopf 1 angeordnet, um die Schreibköpfe W bzw. W1 und die Leseköpfe R bzw. R1 des Magnetkopfs 1 auf verschiedene Spuren des Magnetbands 2 zu positionieren. Eine gestrichelt dargestellte Magnetbandkassette 4 mit dem Magnetband 2 ist in das Magnetbandgerät einsetzbar. Der Magnetkopf 1 greift während des Betriebs des Magnetbandgeräts in eine Öffnung der Kassette 2 ein. Der Magnetkopf 1 ist auf einem Kopfträger 5 befestigt und gemeinsam mit diesem unter Verwendung von zwei Lagern 6 und 7 längs einer Achse 8 in Querrichtung des Magnetbands 2 verschiebbar.

Die Verschiebung des Magnetkopfs 1 erfolgt unter Verwendung eines Elektromotors 9, der vorzugsweise als Schrittmotor ausgebildet ist, jedoch auch als Gleichstrommotor ausgebildet sein kann. Auf der Achse des Motors 9 ist eine Schnecke 10 befestigt, die mit einem Schneckenrad 11 in Wirkverbindung steht. Die Achse 8 weist im Bereich des Schneckenrads 11 ein Außengewinde 12 auf, das mit einem Innengewinde des Schneckenrads 11 in Wirkverbindung steht. Wenn sich die Schnecke 10 dreht, wird das Schneckenrad 11 angetrieben, so daß dieses sich in axialer Richtung der Achse 8 bewegt. Eine Druckfeder 13 drückt den Kopfträger 5 gegen das Schneckenrad 11, so daß dieser der Bewegung des Schneckenrads 11 in axialer Richtung folgt und damit den Magnetkopf 1 auf verschiedene Spuren des Magnetbands 2 positioniert. Während der Bewegung des Kopfträgers 5 in axialer Richtung der Achse 8 wird verhindert, daß dieser sich mit der Drehung des Schneckenrads 11 drehen kann. Während des Einschiebens oder Herausnehmens der Kassette 4 ist der Magnetkopf 1 gemeinsam mit dem Kopfträger 5, jedoch aus der Arbeitsstellung in seine Ruhestellung schwenkbar. Der Motor 9 erhält von einer Motorsteuerung 15 Steuersignale, die beispielsweise als Schrittimpulse ausgebildet sind, wenn der Motor 9 ein Schrittmotor ist. Die Motorsteuerung 15 wird von einem Impulsgeber 21 angesteuert, der beim Positionieren eines Schreib/Lesekopfs in den Magnetkopf 1 auf eine bestimmte Spur des Magnetbands 2 die Steuersignale empfängt, um von einer Istposition, beispielsweise einer bestimmten Spur auf eine Sollposition, beispielsweise eine andere Spur zu gelangen. Eine derartige Positionierung ist allgemein bekannt und beispielsweise der US-PS 4,313,141 zu entnehmen.

Eine bestimmte Spur wird von einer zentralen Steuereinheit des Magnetbandgeräts oder einer als Mikrorechner ausgebildeten Steuereinheit 26 mitgeteilt. Die Istposition, in der sich der Magnetkopf 1 jeweils befindet, ist in einem Speicher 18 gespeichert oder kann ebenfalls im Mikrorechner 26 gespeichert werden.

Zu Beginn des Betriebs des Magnetbandgeräts wird der Magnetkopf 1 in eine Bezugsposition gebracht, die durch einen Bezugspositionsgeber 25 ermittelt wird. Diese Bezugsposition ist beispielsweise ein äußerer Rand des Magnetbands 2, der durch ein Verfahren ermittelt wird, wie es in der DE-OS 31 12 886 beschrieben ist. Die Bezugsposition kann auch eine erste, beispielsweise äußere oder mittlere Spur des Magnetbands 2 sein oder es kann, wie es in der US-PS 4,313,141 beschrieben ist, eine bestimmte Stellung der Positionseinrichtung sein, die mittels einer Lichtschranke erkannt wird. Diese Bezugsposition ist dann die Istposition und ist in dem Speicher 18 gespeichert. Der Mikrorechner 26 enthält einen Zuordner, der den Positionswert einer einzunehmenden Spur enthält. Sowohl der vom Zuordner abgegebene Sollpositionswert als auch der vom Speicher 18 abgegebene Istpositionswert werden einem Vergleicher 20 zugeführt, der aus der Differenz zwischen dem Soll- und dem Istpositionswert den Abstand sowohl hinsichtlich des Betrags als auch hinsichtlich der Richtung ermittelt und den Impulsgeber 21 veranlaßt, an die Motorsteuerung 15 solange Impulse für den Schrittmotor 9 abzugeben, bis der Sollpositionswert und der Istpositionswert übereinstimmen. Der Magnetkopf 1 wird damit unter Verwendung des Motors 9 auf die gewünschte Spur positioniert. Gleichzeitig werden die Impulse dem Speicher 18 zugeführt, so daß dieser die neue Istposition beinhaltet. Der Speicher 18 kann zu diesem Zweck einen Addierer enthalten, der von der neuen Istposition jeweils die entsprechende Anzahl von Impulsen subtrahiert oder zu dieser hinzuaddiert. Er kann auch als Zähler ausgebildet sein, dessen Zählerstand die jeweilige Istposition angibt und der durch die von dem Impulsgeber 21 abgegebenen Impulse jeweils aufwärts oder abwärts gezählt wird.

Wie bereits erwähnt, kann der Motor 9 auch als Gleichstrommotor ausgebildet sein. Zur genauen Positionierung kann auf der Achse des Gleichstrommotors in diesem Fall eine Taktscheibe angeordnet sein, bei der eine Vielzahl von Schlitzen durch optoelektronische Elemente abgetastet wird. In diesem Fall gibt der Impulsgeber 21 an die Motorsteuerung 15 solange Signale ab, bis eine vorgegebene Anzahl von Taktimpulsen abgetastet wurde, die der Differenz zwischen der Soll- und der Istposition entspricht.

Für die Ermittlung des ersten Korrekturwerts b + c gibt der Mikrorechner 26 zunächst an den Vergleicher 20 den dem Schreibkopf W zugeordneten Positionswert für das Aufzeichnen einer Spur ab. Die Motorsteuerung 15 gibt dann solange Impulse an den Motor 9 ab, bis der Schreibkopf W zu der entsprechenden Spur positioniert ist. Anschließend gibt der Mikrorechner 26 an eine Schreibsteuerung 28 Steuersignale S1 ab, die das Aufzeichnen von Signalen auf das Magnetband 2 mittels des Schreibkopfs W bewirken. Anschließend gibt der Mikrorechner 26 Steuersignale S2 an den Impulsgeber 21 ab, so daß dieser den Magnetkopf 1 abwechselnd nach oben und nach unten derart bewegt, daß der Lesekopf R über die Ränder der aufgezeichneten Spur hinweg bewegt wird. Dabei empfängt eine Lesesteuerung 27 vom Lesekopf R Lesesignale und unter Verwendung von Steuersignalen S3 erkennt der Mikrorechner 26 die Positionswerte der Ränder der Spur und ermittelt den Positionswert der Mitte der Spur. Aus der Differenz zwischen diesen Positionswert und dem dem Schreibkopf W zugeordneten Positionswert ergibt sich der erste Korrekturwert b + c.

Für die Ermittlung des zweiten Korrekturwerts kann der Mikrorechner 26 an die nicht dargestellte Antriebsanordnung des Magnetbands 2 ein Signal abgeben, das die Umkehrung der Bewegungsrichtung des Magnetbands bewirkt und es kann sich derselbe Vorgang wiederholen, um die Mitte der Spur mittels des Lesekopfs R zu finden. Aus der Differenz der beiden Positionswerte kann der Mikrorechner 26 den seitlichen Versatz des Magnetbands 2 in Abhängigkeit von der Bewegungsrichtung des Magnetbands 2 ermitteln.

Für die Ermittlung des dritten Korrekturwerts a, der der Abweichung des Abstands der beiden Kopfsysteme entspricht, gibt der Mikrorechner 26 nach dem Ermitteln und Speichern des Positionswerts der Mitte der Spur ein Steuersignal S4 an den Impulsgeber und dieser bewirkt eine Positionierung des Lesekopfs R auf eine durch den Schreibkopf W1 des benachbarten Kopfsystems aufgezeichnete Spur. Der Lesekopf R ermittelt die Mitte dieser Spur und aus der Differenz der Positionswerte der Mitten der beiden Spuren und dem ersten Korrekturwert wird der dritte Korrekturwert a berechnet.

Die Ermittlung der Korrekturwerte kann bei der Fertigung des Magnetbandgeräts, bei Wartungen oder von Zeit zu Zeit selbsttätig durch den Mikrorechner 26 durchgeführt werden.

In Abhängigkeit davon, ob ein breiter oder ein schmaler Schreibkopf und ein schmaler bzw. ein breiter Lesekopf verwendet wird, werden anschließend bei dem normalen Betrieb des Magnetbandgeräts bei der Positionierung die Korrekturwerte berücksichtigt.

Beim Aufzeichnen der Bezugsspur RT ist die Korrektur nur bei dem breiten Schreibkopf W erforderlich. In diesem Fall wird zu dem Abstand DO der Korrekturwert d + c hinzuaddiert, um die Bezugsspur RT genau auf dem Magnetband 2 aufzuzeichnen.

Beim Lesen einer Spur ist jeweils von dem dem Schreibkopf W zugeordneten Positionswert der Korrekturwert b + c zu subtrahieren, um den Lesekopf R genau auf der Spur zu positionieren.

Zusätzlich ist gegebenenfalls jeweils der zweite Korrekturwert in entsprechender Weise zu berücksichtigen.

Bei der Aufzeichnung der Spuren T und T1 entsprechend FIG 7 wird der dritte Korrekturwert a berücksichtigt, so daß der Abstand zwischen den Spuren T und T1 genau D beträgt. Zusätzlich werden auch hier die ersten Korrekturwerte b + c bzw. b1 + c1 und gegebenenfalls der zweite Korrekturwert berücksichtigt.

## Ansprüche

1. Verfahren zum genauen Positionieren eines Magnetkopfs auf verschiedene Spuren eines Magnetbands in einem Magnetbandgerät, wobei der Magnetkopf für die Positionierung auf die verschiedenen Spuren senkrecht zur Bewegungsrichtung des Magnetbands verschiebbar ist, wobei den verschiedenen Spuren bestimmte Positionswerte einer den Magnetkopf tragenden Positioniereinrichtung zugeordnet sind und wobei der Magnetkopf mindestens einen Schreibkopf und einen zugeordneten Lesekopf enthält, **gekennzeichnet durch** folgende Schritte:

a) unter Verwendung des Schreibkopfs (W) werden Signale in einer Spur auf dem bewegten Magnetband (2) aufgezeichnet, ohne daß der Schreibkopf (W) bewegt wird,

b) der Positionswert des Magnetkopfs (1) wird gespeichert,

c) unter Verwendung des Lesekopfs (R) wird durch Bewegung des Magnetkopfs (1) senkrecht zur Bewegungsrichtung des Magnetbands (2) die Mitte dieser Spur festgestellt,

d) der zugehörige Positionswert des Magnetkopfs (1) wird ermittelt,

e) aus der Differenz der beiden Positionswerte wird ein erster Korrekturwert (b + c) ermittelt, der bei einer Positionierung des Magnetkopfs (1) auf die verschiedenen Spuren berücksichtigt wird.

2. Verfahren nach Anspruch 1, **gekennzeichnet durch** die folgenden zusätzlichen Schritte:

a) die Bewegungsrichtung des Magnetbands (1) wird umgedreht,

b) die Mitte der Spur wird unter Verwendung des Lesekopfs (R) festgestellt,

c) der Positionswert des Magnetkopfs (1) wird gespeichert,

d) aus der Differenz der den Mitten der Spur zugeordneten Positionswerte wird ein zweiter Korrekturwert ermittelt.

3. Verfahren nach Anspruch 1 oder Anspruch 2, bei dem der Magnetkopf ein aus dem Schreibkopf und dem Lesekopf gebildetes erstes Kopfsystem und ein aus einem weiteren Schreibkopf und einem weiteren Lesekopf gebildetes zweites Kopfsystem aufweist und bei dem die beiden Kopfsysteme in einem vorgegebenen Abstand senkrecht zur Bewegungsrichtung des Magnetbands angeordnet sind, **gekennzeichnet durch** die folgenden weiteren Schritte:

a) mit dem weiteren Schreibkopf (W1) werden Signale auf eine weitere Spur des Magnetbands (2) aufgezeichnet,

b) der Lesekopf (R) wird zur weiteren Spur positioniert,

c) mit dem Lesekopf (R) wird die Mitte der weiteren Spur festgelegt,

d) der zugehörige Positionswert des Magnetkopfs (1) wird ermittelt,

e) aus der Differenz der den Mitten der beiden Spuren zugeordneten Positionswerte wird ein dritter Korrekturwert (a) ermittelt, der bei der Positionierung des Magnetkopfs (1) auf die verschiedenen Spuren berücksichtigt wird.

4. Verfahren nach einem der Ansprüche 1 bis 3, **dadurch gekennzeichnet, daß** die Mitte jeder Spur durch Ermittlung der Positionswerte der Ränder dieser Spur und durch eine Mittelwertbildung erfolgt.

5. Verfahren nach einem der Ansprüche 1 bis 4, **dadurch gekennzeichnet, daß** als Positionswerte die jeweiligen Anzahlen von Schritten eines in der Positioniereinrichtung vorgesehenen Schrittmotors (9) vorgesehen sind.

6. Verfahren nach einem der Ansprüche 1 bis 5, **dadurch gekennzeichnet,** daß die Ermittlung der Korrekturwerte selbsttätig erfolgt.

## Claims

1. Method for accurately positioning a magnetic head to various tracks of a magnetic tape in a magnetic tape recorder, in which arrangement the magnetic head is displaceable perpendicularly to the direction of movement of the magnetic tape for the positioning to the various tracks, the various tracks being allocated particular position values of a positioning device carrying the magnetic head and the magnetic head containing at least one write head and an associated read head, characterised by the following steps:
   a) using the write head (W), signals are recorded on one track on the moving magnetic tape (2) without moving the write head (W),
   b) the position value of the magnetic head (1) is stored,
   c) using the read head (R), the centre of this track is found by moving the magnetic head (1) perpendicularly to the direction of movement of the magnetic tape (2),
   d) the associated position value of the magnetic head (1) is determined,
   e) from the difference of the two position values, a first correction value (b + c) is determined which is taken into consideration when positioning the magnetic head (1) to the various tracks.

2. Method according to Claim 1, characterised by the following additional steps:
   a) the direction of movement of the magnetic tape (1) is reversed,
   b) the centre of the track is found using the read head (R),
   c) the position value of the magnetic head (1) is stored,
   d) from the difference of the position values allocated to the centres of the track, a second correction value is determined.

3. Method according to Claim 1 or Claim 2, in which the magnetic head exhibits a first head system formed by the write head and the read head and a second head system formed by a further write head and a further read head and in which the two head systems are arranged perpendicularly to the direction of movement of the magnetic tape at a predetermined distance, characterised by the following further steps:
   a) the further write head (WI) is used for recording signals onto a further track of the magnetic tape (2),
   b) the read head (R) is positioned to the further track,
   c) the read head (R) is used for determining the centre of the further track,
   d) the associated position value of the magnetic head (1) is determined,
   e) from the difference of the position values allocated to the centres of the two tracks, a third correction value (a) is determined which is taken into consideration during the positioning of the magnetic head (1) to the various tracks.

4. Method according to one of Claims 1 to 3, characterised in that the centre of each track occurs due to determination of the position values of the edges of this track and by forming a mean value.

5. Method according to one of Claims 1 to 4, characterised in that the respective numbers of steps of a stepping motor (9) provided in the positioning device are provided as position values.

6. Method according to one of Claims 1 to 5, characterised in that the correction values are automatically determined.

## Revendications

1. Procédé pour positionner de façon précise une tête magnétique sur différentes pistes d'une bande magnétique dans un appareil à bande magnétique, selon lequel pour le positionnement sur les différentes pistes, la tête magnétique est déplaçable perpendiculairement à la direction de déplacement de la bande magnétique, des valeurs de position déterminées d'un dispositif de positionnement portant la tête magnétique étant associées aux différentes pistes, et la tête magnétique comportant au moins une tête d'enregistrement et une tête de lecture associées, caractérisé par les étapes suivantes :
   a) des signaux sont enregistrés, moyennant l'utilisation de la tête d'enregistrement (W), sur une piste de la bande magnétique (2) en déplacement, sans déplacement de la tête d'enregistrement (W),

b) la valeur de position de la tête magnétique (1) est mémorisée,

c) sous l'effet du déplacement de la tête magnétique (1) perpendiculairement à la direction de déplacement de la bande magnétique (2), le centre de cette piste est déterminé moyennant l'utilisation de la tête de lecture (R),

d) la valeur de position associée de la tête magnétique (1) est déterminée,

e) à partir de la différence des deux valeurs de position est déterminée une première valeur de correction (b + c), qui est prise en compte lors d'un positionnement de la tête magnétique (1) sur les différentes pistes.

2. Procédé suivant la revendication 1, caractérisé par les étapes supplémentaires suivantes :

a) le sens de déplacement de la bande magnétique (1) est inversée,

b) le centre de la piste est déterminé moyennant l'utilisation de la tête de lecture (R),

c) la valeur de position de la tête magnétique (1) est mémorisée,

d) une seconde valeur de correction est déterminée à partir de la différence des valeurs de position associées aux centres de la piste.

3. Procédé suivant la revendication 1 ou 2, selon lequel la tête magnétique comporte un premier système de têtes formé de la tête d'enregistrement et de la tête de lecture, et un second système de têtes formé par une autre tête d'enregistrement et une autre tête de lecture, et les deux systèmes de têtes sont disposés à une distance prédéterminée perpendiculairement à la direction de déplacement de la bande magnétique, caractérisé par les étapes supplémentaires suivantes :

a) des signaux sont enregistrés au moyen de l'autre tête d'enregistrement (W1) sur une autre piste de la bande magnétique (2),

b) la tête de lecture (R) est positionnée sur l'autre piste;

c) le centre de l'autre piste est déterminé par la tête de lecture (R),

d) la valeur de position associée de la tête magnétique (1) est déterminée,

e) à partir de la différence des valeurs de position associées aux centres des deux pistes est formée une troisième valeur de correction (a), qui est prise en compte lors du positionnement de la tête magnétique (1) sur les différentes pistes.

4. Procédé suivant l'une des revendications 1 à 3, caractérisé par le fait que le centre de chaque piste est obtenu par détermination des valeurs de position des bords de cette piste et par formation de la valeur moyenne.

5. Procédé suivant l'une des revendications 1 à 4, caractérisé par le fait qu'il est prévu, comme valeurs de position, les nombres respectifs de pas d'un moteur pas-à-pas (9) prévu dans le dispositif de positionnement.

6. Procédé suivant l'une des revendications 1 à 5, caractérisé par le fait que la détermination des valeurs de correction s'effectue de façon automatique.

# FIG 1

1 — G1 — G2 —

W1 — b1 — R1

D+a

R — b — W

B

# FIG 2

1 — G1 — G2

W1 — c1 — R1

R — c — W

a

B

# FIG 3

2

R — RT — W

DO

TO

R — W

# FIG 4

2

R — RT — W

DO−(b+c)

TO

R — b+c — W

# FIG 5

RT

DO

R — W

b+c

# FIG 6

RT — W

R — W

b+c

DO−2(b+c)

DO−(b+c)

## FIG 7

## FIG 8